# EUROPÄISCHE PATENTSCHRIFT

(11) **EP 4 198 392 B1**
(45) Veröffentlichungstag und Bekanntmachung des Hinweises auf die Patenterteilung: **15.04.2026**
(21) Anmeldenummer: 22213589.9
(22) Anmeldetag: 14.12.2022
(51) Int. Cl.: F23C 9/00, F23L 7/00, F23G 5/50, F23L 9/02

(54) **VERFAHREN ZUR VERBRENNUNG VON ABFALL**
METHOD FOR BURNING WASTE
PROCÉDÉ POUR LA COMBUSTION DE DÉCHETS

(30) Priorität: 15.12.2021 DE 102021006192
(43) Veröffentlichungstag der Anmeldung: 21.06.2023
(73) Patentinhaber: Martin GmbH für Umwelt- und Energietechnik, 80807 München (DE)
(72) Erfinder: Martin, Johannes Ulrich, 81247 München (DE); Sebastian Josef, Jell, 81667 München (DE); Schönsteiner, Max Josef, 81249 München (DE)
(74) Vertreter: Castell, Klaus

(56) Entgegenhaltungen:
- EP-A1- 2 584 256
- WO-A1-2007/011141
- WO-A1-96/04507
- US-A1- 2002 009 399

## Beschreibung

Die Erfindung betrifft ein Verfahren zur Verbrennung von Abfall auf einem Verbrennungsrost einer Feuerungsanlage.

Müllheizkraftwerke haben die besondere Eigenschaft, dass in den Abgasen nur geringe CO₂-Konzentrationen vorkommen. Dies ist einerseits vorteilhaft. Andererseits ist die Abscheidung des restlichen CO₂ aufwändig und kostenintensiv, da relativ große Gasmengen behandelt werden müssen. Diese großen Rauchgasmengen führen zu aufwändigen Rauchgasreinigungsanlagen, für die in der Regel Komponenten für die Abscheidung des Kohlenstoffdioxids nicht wirtschaftlich sind.

Die im Stand der Technik beschriebene Sauerstoffanreicherung der Primärverbrennungsluft führt zwar zu einer Reduktion der Rauchgasmenge. Die Anreicherung der Verbrennungsluft ist jedoch limitiert, da die Substitution von Luftsauerstoff durch reinen Sauerstoff durch die Erhöhung der adiabaten Verbrennungstemperatur eine hohe thermische Belastung der Anlage bedeutet. Zusätzlich ist die Regelung aufwändig, da die zeitlich verzögerte Reaktion der gesamten Anlage auf eine Veränderung der Sauerstoffzugabe berücksichtigt werden muss.

Ein gattungsgemäßes Verfahren ist aus der WO 2007/011141 A1 bekannt. Weitere Feuerungsanlagen sind aus der WO 96-04507 A1 und aus der US 2002/009399 A1 bekannt.

Der Erfindung liegt daher die Aufgabe zugrunde, ein Verfahren zur Verbrennung von Abfall dahingehend weiterzuentwickeln, dass die Abscheidung des CO₂ im Rauchgas erleichtert wird.

Diese Aufgabe wird mit einem Verfahren mit den Merkmalen des Patentanspruchs 1 gelöst.

Das erfindungsgemäße Verfahren sieht vor, dass beim Verbrennen von Abfall auf einem Verbrennungsrost einer Feuerungsanlage Sauerstoff mit einem Trägergas als Sauerstoff-Trägergas-Gemisch der Verbrennung zugegeben wird, wobei das Trägergas rezirkuliertes Gas aus der Feuerungsanlage mit einer CO₂-Konzentration von 10 bis 99 % ist. Der Verbrennung wird somit ein Sauerstoff-Trägergas-Gemisch zugegeben und in diesem Sauerstoff- Trägergas-Gemisch ist auch das Trägergas wiederum ein Trägergas-Gemisch, das 10 bis 95 % CO₂ aufweist. Dies führt dazu, dass letztendlich Sauerstoff mit CO₂ und gegebenenfalls mit anderen Gasen der Verbrennung zugegeben wird. Dies hat zur Folge, dass die CO₂-Konzentration im Abgas der Verbrennungsanlage steigt und die Regelbarkeit der Anlage über die zugeführten Gase erleichtert wird.

Dies hat zur Folge, dass wegen der höheren CO₂-Konzentration im Abgas die Abscheidung des CO₂ aus dem Abgas erleichtert wird. Außerdem verringern sich die Rauchgasmengen, da das Trägergas dem Rauchgas entzogen wird. Die Verbrennungstemperaturen können zudem in einem für die Komponenten zulässigen Rahmen bleiben.

Die DE 102 13 788 B4 und die DE 102 13 790 beschreiben bereits Abfallverbrennungsanlagen mit einer Verbrennungsregelung, die eine Sauerstoffanreicherung der Primärverbrennungsluft auf 25 Vol.-% bis 40 Vol.-% aufweist.

Hierbei wird die Sauerstoffanreicherung der Primärluft dazu genutzt, die Schlackequalität zu verbessern, indem durch den höheren Sauerstoffanteil die Temperaturen im Brennbett steigen und dadurch die Schlacke versintert. Dadurch wurde eine bessere Einbindung der Schadstoffe erzielt.

Derartige Verfahren sind jedoch regelungs- und verfahrenstechnisch aufwändig und die verbesserte Schlackenqualität rechtfertigt den Aufwand häufig nicht.

Vorteilhaft ist es bei dem erfindungsgemäßen Verfahren, wenn das Sauerstoff-Trägergas-Gemisch mit einer Sauerstoffkonzentration von 5 bis 40 % und vorzugsweise von 16 bis 40 % zugegeben wird. Das heißt mehr als die Hälfte des Sauerstoff-Trägergas-Gemisches ist Trägergas.

Der Sauerstoff und insbesondere das Sauerstoff- Trägergas-Gemisch werden der Sekundärverbrennung zugegeben.

Da die CO₂-Konzentration des aus der Feuerungsanlage rezirkulierten Gases bei 10 bis 99 % liegt, hat das Trägergas noch einen weiteren Gasanteil, der vorzugweise Luft und insbesondere Umgebungsluft ist. Das rezirkulierte kann extrem viel CO₂ aufweisen und das CO₂ Gas aus der Abscheidung kann einen Reinheitsgrad von 80 bis 99 % CO₂ haben. Bevor das rezirkulierte Gas der Feuerung zugegeben wird, kann es auf die Bedürfnisse des Betriebs eingestellt werden und beispielsweise mit Luft gemischt werden. Dies ermöglicht es, den CO₂ Gehalt individuell einzustellen. In der Praxis kann das der Feuerungsanlage zugegebene Gas zwischen 30 und 84 % CO₂ aufweisen. Dies ermöglicht es, einen Mindest-O₂-Gehalt von 16 % einzuhalten, um die Verbrennung in Gang zu halten.

Eine besonders bevorzugte Ausführungsvariante sieht vor, dass das rezirkulierte Gas nach einer Behandlung des Abgases der Feuerungsanlage abgezogen wird.

Das erfindungsgemäße Verfahren ermöglicht es, zumindest einen Teil des Abgases der Feuerungsanlage einer Nachbearbeitung zuzuführen, in der CO₂ abgeschieden wird

Eine nicht beanspruchte Vorrichtung sieht vor, dass die Verbrennungsanlage mindestens eine Sekundärluftzuführung oberhalb des Verbrennungsrostes aufweist, die in Flussrichtung einen Anschluss für Luft und/oder Rezirkulationsgas, ein Ventil und eine Sekundärluftdüse aufweist, wobei zwischen dem Ventil und der Sekundärluftdüse eine Sauerstoffzuführleitung angeordnet ist, die einen Anschluss für Sauerstoff aufweist.

Langfristig ermöglicht dies, Sauerstoff aus der Wasserstoffproduktion der Verbrennungsanlage zuzuführen und die CO₂-Abscheidung im Rauchgas zu erleichtern, indem der CO₂-Gehalt im Rauchgas gesteigert und der Stickstoffanteil verringert wird.

Ein Ausführungsbeispiel ist in der Zeichnung dargestellt und wird im Folgenden näher erläutert. Es zeigen
- Fig. 1: schematisch einen Schnitt durch eine Verbrennungsanlage und
- Fig. 2: ein Schema der Anlage und der Stoffströme.

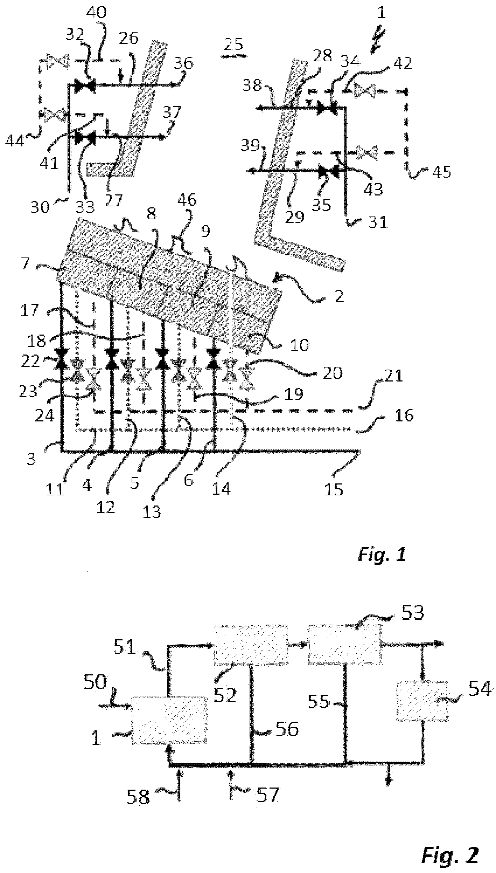

Die in der Figur 1 gezeigte Feuerungsanlage 1 hat ein Verbrennungsrost 2, zu dem Primärluftzuführleitungen 3 bis 6 führen. Diese Primärluftzuführleitungen 3 bis 6 führen zu einzelnen Zonen 7 bis 10 des Verbrennungsrostes 2. Neben den Primärluftzuführleitungen 3 bis 6 sind unter dem Verbrennungsrost 2 Rezirkulationsgaszuführleitungen 11 bis 14. Die Primärluftzuführleitungen 3 bis 6 haben einen Anschluss 15 für Primärluft, die Rezirkulationsgaszuführleitungen 11 bis 14 haben einen Anschluss 16 für Rezirkulationsgas und die Sauerstoffzuführleitungen 17 bis 20 haben einen Anschluss 21 für Sauerstoff.

Ventile 22 bis 24 (nur exemplarisch beziffert) in den Primärluftzuführleitungen 3 bis 6, den Rezirkulationsgaszuführleitungen 11 bis 14 und den Sauerstoffzuführleitungen 17 bis 20 ermöglichen es, abgestimmt auf die einzelnen Zonen 7 bis 10, ganz gezielt unterschiedliche Gase dem Verbrennungsrost 2 zuzuführen.

Oberhalb des Verbrennungsrostes 2 ist der Rauchgaszug 25 mit Sekundärluftzuführleitungen 26 bis 29, die jeweils oder gemeinsam einen Anschluss 30, 31 für Luft und/oder Rezirkulationsgas aufweisen. Jede Sekundärluftzuführleitung weist ein Ventil 32 bis 35 auf, um die Zuführung der Luft und/oder des Rezirkulationsgases einzustellen oder zu regeln. Die Luft und/oder das Rezirkulationsgas werden über Ventile 32 bis 35 gesteuert Sekundärluftdüsen 36 bis 39 zugeführt, über die die Sekundärluft in den Rauchgaszug 25 gelangt. Zwischen den Ventilen 32 bis 35 und den Sekundärluftdüsen 36 bis 39 ist jeweils eine Sauerstoffzuführleitung 40 bis 43 angeordnet, die einen Anschluss 44, 45 für Sauerstoff aufweist.

Dadurch kann auch im Rauchgaszug 25 Sekundärluft als Luft und/oder Rezirkulationsgas über die Düsen 36 bis 39 zugeführt werden.

Bei der Verwendung der Feuerungsanlage 1 wird auf dem Verbrennungsrost 2 Abfall 46 verbrannt und während der Verbrennung wird über die Leitungen 17 bis 20 Sauerstoff dem Verbrennungsrost 2 und über die Leitungen 40 bis 43 Sauerstoff dem Rauchgaszug 25 zugegeben. Dieser Sauerstoff wird zusammen mit Rezirkulationsgas zugegeben, das über die Anschlüsse 16, 30 und 31 zugegeben werden kann.

Die Figur 2 zeigt das erfindungsgemäße Verfahren schematisch. Der Feuerungsanlage 1 wird Brennstoff 50 zugegeben und die Rauchgase 51 gelangen zu einer Wärmenutzung 52 und von dort zu einer Abgasreinigung 53. Von der Abgasreinigung 53 gelangt das Abgas 51 zu einer Nachbearbeitung 54, in der CO₂ abgeschieden werden kann. Nach der Nachbearbeitung 54 gelangt zumindest ein Teil des Abgases zurück zur Feuerungsanlage 1. Zu diesem Abgasstrom von der Nachbearbeitung 54 zur Feuerung 51 können Abgasströme 55 und 56 von der Abgasreinigung 53 oder der Wärmenutzung 52 zugeführt werden. Außerdem sind eine Zuführleitung 57 für Luft und eine Zuführleitung 58 für Sauerstoff vorgesehen.

## Patentansprüche

1. Verfahren zur Verbrennung von Abfall (46) auf einem Verbrennungsrost (2) einer Feuerungsanlage (1), bei dem Sauerstoff mit einem Trägergas als Sauerstoff-Trägergas-Gemisch der Verbrennung zugegeben wird, wobei das Trägergas rezirkuliertes Gas aus der Feuerungsanlage (1) mit einer CO₂-Konzentration von 10 bis 99 % ist, und der Sauerstoff vor Zuführung in die Feuerungsanlage (1) mit dem Trägergas gemischt wird, wobei das Sauerstoff-Trägergas-Gemisch der Sekundärverbrennung zugegeben wird, **dadurch gekennzeichnet, dass** bevor das Sauerstoff-Trägergas-Gemisch der Feuerung zugegeben wird, es durch das Zumischen des Sauerstoffs auf die Bedürfnisse des Betriebs eingestellt wird, um den CO₂ Gehalt im Sauerstoff- Trägergas-Gemisch individuell einzustellen.

2. Verfahren nach Anspruch 1, ***dadurch gekennzeichnet, dass*** das Sauerstoff-Trägergas-Gemisch mit einer Sauerstoffkonzentration von 5 bis 40 % und vorzugsweise von 16 bis 40 % zugegeben wird.

3. Verfahren nach einem der vorhergehenden Ansprüche, ***dadurch gekennzeichnet, dass*** das Trägergas Luft, insbesondere Umgebungsluft, aufweist.

4. Verfahren nach einem der vorhergehenden Ansprüche, ***dadurch gekennzeichnet, dass*** das rezirkulierte Gas nach einer Behandlung des Abgases (51) der Feuerungsanlage (1) abgezogen wird.

5. Verfahren nach einem der vorhergehenden Ansprüche, ***dadurch gekennzeichnet, dass*** zumindest ein Teil des Abgases (51) der Feuerungsanlage (1) einer Nachbearbeitung (54) zugeführt wird, in der CO₂ abgeschieden wird.

## Claims

1. Method for incinerating waste (46) on a combustion grate (2) of a furnace (1), in which oxygen having a carrier gas is fed to the combustion as an oxygen-carrier gas mixture, wherein the carrier gas is recirculated gas from the furnace (1) with a CO₂ concentration of 10 to 99%, and the oxygen is mixed with the carrier gas prior to being supplied into the furnace (1), wherein the oxygen-carrier gas mixture is added to the secondary combustion, ***characterized in that,*** before the oxygen-carrier gas mixture is fed to the furnace, it is set to the needs of the operation by adding oxygen in order to individually adjust the CO₂ content in the oxygen-carrier gas mixture.

2. Method according to claim 1, ***characterized in that*** the oxygen-carrier gas mixture is added at an oxygen concentration of 5 to 40% and preferably of 16 to 40%.

3. Method according to one of the preceding claims, ***characterized in that*** the carrier gas contains air, in particular ambient air.

4. Method according to one of the preceding claims, ***characterized in that*** the recirculated gas is extracted after a processing of the exhaust gas (51) from the furnace (1).

5. Method according to one of the preceding claims, ***characterized in that*** at least a part of the exhaust gas (51) from the furnace (1) is supplied to a post-processing (54), in which the CO₂ is separated out.

## Revendications

1. Procédé d'incinération de déchets (46) sur une grille de combustion (2) d'une installation d'incinération (1), lors duquel l'on ajoute à la combustion de l'oxygène avec un gaz porteur sous la forme d'un mélange oxygène-gaz porteur, le gaz porteur étant du gaz recyclé provenant de l'installation d'incinération (1) avec une concentration en CO₂ de 10 à 99 % et avant d'être alimenté dans l'installation d'incinération (1), l'oxygène étant mélangé avec le gaz porteur, le mélange oxygène-gaz porteur étant ajouté à la combustion secondaire, ***caractérisé en ce qu***'avant que le mélange oxygène-gaz porteur soit ajouté à l'incinération, par incorporation de l'oxygène, il est réglé aux besoins de fonctionnement, pour un réglage individuel de la teneur en CO₂ dans le mélange oxygène-gaz porteur.

2. Procédé selon la revendication 1, ***caractérisé en ce que*** le mélange oxygène-gaz porteur est ajouté avec une concentration en oxygène de 5 à 40 % et de préférence de 16 à 40 %.

3. Procédé selon l'une quelconque des revendications précédentes, ***caractérisé en ce que*** le gaz porteur comporte de l'air, notamment de l'air ambiant.

4. Procédé selon l'une quelconque des revendications précédentes, ***caractérisé en ce qu***'après un traitement des gaz de fumée (51), le gaz recyclé est soutiré de l'installation d'incinération (1).

5. Procédé selon l'une quelconque des revendications précédentes, ***caractérisé en ce qu***'au moins une partie des gaz de fumées (51) de l'installation d'incinération (1) est amenée à un post-traitement (54), lors duquel du CO₂ est séparé.
